## Europäisches Patentamt
## European Patent Office
## Office européen des brevets

(19)

(11) Veröffentlichungsnummer: **0 108 344**
**B1**

(12)

# EUROPÄISCHE PATENTSCHRIFT

(45) Veröffentlichungstag der Patentschrift:
23.07.86

(51) Int. Cl.⁴: **F 16 L 37/28**

(21) Anmeldenummer: **83110735.4**

(22) Anmeldetag: **27.10.83**

(54) **Kupplungshälfte für eine Leitungsverbindung.**

(30) Priorität: 01.11.82 US 438120
04.05.83 US 491519

(43) Veröffentlichungstag der Anmeldung:
16.05.84 Patentblatt 84/20

(45) Bekanntmachung des Hinweises auf die Patenterteilung:
23.07.86 Patentblatt 86/30

(84) Benannte Vertragsstaaten:
AT BE CH DE FR GB IT LI NL SE

(56) Entgegenhaltungen:
EP-A-0 038 056
DE-A-2 454 372
DE-A-2 736 336
DE-B-1 675 373
US-A-4 373 551

(73) Patentinhaber: **DEERE & COMPANY, 1 John Deere Road, Moline Illinois 61265 (US)**

(72) Erfinder: **Kugler, Uwe Herbert, 2912 Hiawatha, Cedar Falls Iowa 50613 (US)**
Erfinder: **Miller, James Anton, 1727 Four Winds Dr., Cedar Falls Iowa 50613 (US)**

(74) Vertreter: **Feldmann, Bernhard, DEERE & COMPANY European Office, Patent Department Steubenstrasse 36- 42 Postfach 503, D-6800 Mannheim 1 (DE)**

LIBER, STOCKHOLM 1986

## Beschreibung

Die Erfindung betrifft eine Kupplungshälfte für eine Leitungsverbindung, die ein Gehäuse aufweist, mit einem zu einer Druckquelle führenden wahlweise schließbaren Einlaß, einem Ablaß und einem Durchgang zu einer zweiten Kupplungshälfte, die an ihrem dem Durchgang zugelegenen Ende über ein Sperrventil verschließbar ist, wobei in dem Gehäuse ein im entkuppelten Zustand den Durchgang unter der Wirkung einer Feder verschließender und im gekuppelten Zustand das Sperrventil öffnender Kolben vorgesehen ist, der eine mit dem Einlaß und mit dem Durchgang im gekuppelten Zustand verbundene Bohrung aufweist, die anderenends an dem dem Durchgang abgelegenen den über ein Ventil verschließbaren Ablaß aufweisenden Ende des Gehäuses mit einem Druckraum in Verbindung steht.

Kupplungshälften dieser Art (EP A2 0 038 856) dienen dazu, eine Verbindung zwischen einer Druckquelle und einem Verbraucher herzustellen, wobei die Druckquelle an einem Fahrzeugteil vorgesehen ist, während die zweite Kupplungshälfte beispielsweise über einen Schlauch mit dem Verbraucher verbunden ist, der an einem mit dem Fahrzeugteil verbundenen Geräteteil angeschlossen ist. Um ein Austreten der sich in dem Schlauch und dem Verbraucher befindlichen Flüssigkeit oder dergleichen zu verhindern, wenn die beiden Kupplungshälften nicht miteinander verbunden sind, ist das Sperrventil vorgesehen, das aus einer mittels einer Feder auf einen Sitz gepreßten Kugel besteht, die abhängig von dem an dem Verbraucher anstehenden Flüssigkeitsdruck beim Einstecken in die Kupplungshälfte leichter oder schwerer von ihrem Sitz abgehoben werden kann. Um jedoch diese Kugel auch bei hohem Druck an dem Verbraucher von ihrem Sitz abheben zu können, ist der Kolben vorgesehen, der in dem Gehäuse verschiebbar' gelagert ist. Er weist einenends einen länglichen Stößel auf, mit dem er gegen die Kugel unter der Wirkung einer sich an dem Gehäuse abstützenden Feder zur Anlage kommt, sobald die zweite Kupplungshälfte in die Kupplungshälfte eingesteckt wird. Anderenends wird der Kolben von einem weiteren auf diesem begrenzt verschiebbar gelagerten Kolben umgeben, die gemeinsam ihre jeweilige Stirnfläche dem Druckraum zuwenden und wobei an diesem Ende auch die Bohrung aus dem Kolben in den Druckraum mündet. Der Druckraum steht über den Ablaß mit einem Vorratsbehälter in Verbindung, und in dem Druckraum eingeschlossene Flüssigkeit kann diesem zugeführt werden, wenn das den Ablaß öffnende oder schließende Ventil mittels eines Nockenhebels von seinem Sitz abgehoben wird. Die bekannte Kupplungshälfte funktioniert derart, daß zu Beginn des Kuppelvorganges über den Nockenhebel der Ablaß geöffnet wird, bis die zweite Kupplungshälfte in die Kupplungshälfte bis zu deren Durchgang eingeführt ist. Sobald die zweite Kupplungshälfte in den Durchgang gelangt, greift ihr Sperrventil an dem länglichen Stößel des Kolbens an und bewegt den Kolben in Richtung auf den Druckraum zu, wobei gleichzeitig sich in diesem noch befindliche Flüssigkeit über das Ventil des Ablasses aus dem Gehäuse hinausgedrückt wird. Wenn die zweite Kupplungshälfte vollkommen in die Kupplungshälfte eingesetzt ist, wird der Ablaß geschlossen und unter Druck stehende Flüssigkeit dem Einlaß zugeführt. Diese gelangt dann unmittelbar zu dem Sperrventil der zweiten Kupplungshälfte und über die Bohrung in den Druckraum, wo sie die Stirnseiten des Kolbens und des weiteren Kolbens druckbeaufschlagt. Bei genügend großem Druckaufbau in dem Druckraum bewegt sich der Kolben auf das Sperrventil der zweiten Kupplungshälfte zu und hebt dessen Kugel durch den Kontakt mit dem länglichen Stößel von ihrem Sitz ab, so daß der Durchgang für die Flüssigkeit von der Kupplungshälfte zu der zweiten Kupplungshälfte geöffnet ist.

Eine derart ausgebildete Kupplungshälfte arbeitet bereits sehr zufriedenstellend, sie ist aber dennoch verbesserungsfähig.

Der Erfindung liegt die Aufgabe zugrunde, die Kupplungshälfte so weiterzubilden, daß auch bei Druckschwankungen das Sperrventil der zweiten Kupplungshälfte mit Sicherheit offengehalten wird.

Diese Aufgabe ist erfindungsgemäß dadurch gelöst worden, daß in der Bohrung ein Rückschlagventil vorgesehen ist.

Auf diese Weise kann Druckflüssigkeit oder dergleichen in den Druckraum eintreten und grundsätzlich nicht mehr entweichen, wodurch die Schiebebewegung des Kolbens in Richtung auf den Ablaß zu blockiert wird. Durch dieses Festlegen des Kolbens wird auch das Sperrventil stets in seiner Offenstellung gehalten, d. h. solange der Ablaß in dem Druckraum nicht geöffnet wird, kann sich das Sperrventil im gekuppelten Zustand nicht schließen. Der Druckraum wirkt somit in einer Richtung als mechanische Bremse. Demnach kann bei einem plötzlichen Abfallen des Druckes der Flüssigkeit oder des Gases oder bei einem sich aufgrund von übermäßig viel und schnell zurückfließender Flüssigkeit an der Kugel des Sperrventils aufbauenden hohen Druck, der höher ist als der sich in dem Druckraum aufbauende Druck, der Kolben nicht in eine Stellung zurückverstellt werden, in der er die Kugel des Sperrventils nicht mehr von ihrem Sitz fernhält, wodurch der Durchgang unterbrochen wäre.

Um eine für den Betrieb der Kupplungshälften übermäßig hohe Belastung zu vermeiden, die sich beispielsweise aufgrund von Wärmeeinwirkungen auf die in dem Druckraum eingeschlossene Flüssigkeit, die deren Ausdehnung bedingt, ergeben kann, ist erfindungsgemäß zur Sicherheit vorgesehen, daß bei Druckspitzen eine Verbindung des Druckraumes zum Einlaß entsteht. Dabei tritt eine Verbindung des Druckraumes mit dem Einlaß, der wiederum mit dem Durchgang verkehrt, aber erst bei Druckwerten auf, die weit oberhalb des normalen Betriebsdruckes liegen, so daß während des normalen Betriebes der Kupplungshälften das Sperrventil der zweiten Kupplungshälften geöffnet bleibt.

Wenn nach einem weiteren Merkmal der Erfindung bei einer Kupplungshälfte, bei der das den Ablaß verschließende Ventil gegen die Wirkung einer Feder verschiebbar ist, das Rückschlagventil gegen die Wirkung dieser Feder in seine den Durchfluß vom Einlaß zu dem Druckraum öffnende Stellung bringbar ist, dann ist gewährleistet, daß, sobald unter Druck stehende Flüssigkeit in den Druckraum einströmt, wodurch die Feder gespannt wird, diese Spannung auch auf das Ventil des Ablasses übertragen wird, wodurch dieses um so fester auf seinen Sitz gepreßt wird. Ebenso wird bei einem Verschieben des Ventils für den Ablaß über die Feder ein Druck auf das Rückschlagventil ausgeübt, wodurch dieses fester in seinem dichtenden Zustand gehalten wird und sich in dem Gehäuse noch befindliche Flüssigkeit nicht zusätzlich durch den Ablaß austreten kann.

Entsprechend der Erfindung ist bei einer Kupplungshälfte mit einem den Kolben umgebenden weiteren Kolben vorgesehen, daß das Rückschlagventil als Kegelventil ausgebildet ist, das in der Bohrung verschiebbar und gegen den weiteren Kolben flüssigkeitsdicht zur Anlage bringbar ist. Somit bleiben die Vorteile des Rückschlagventils erhalten, während aus der Hinzunahme des an sich bekannten weiteren Kolbens eine Vergrößerung der dem Druckraum zugewandten Stirnfläche resultiert, mit deren Hilfe ein geringerer Druck zum Verschieben des Kolbens erforderlich wird. Ferner kann die Verbindung des Kolbens mit dem weiteren Kolben auch derart gewählt werden, daß beim Zurückverstellen des Kolbens in seine dem Druckraum zugelegene Stellung bedingt durch seine Anlage an dem Sperrventil der zweiten Kupplungshälfte, während diese eingeschoben wird, nur der Kolben, nicht aber der weitere Kolben verschoben wird, so daß aus dem Druckraum nur ein Teil der sich dort befindlichen Flüssigkeit herausgedrückt werden muß.

Nach einem weiteren Vorschlag der Erfindung wird in einfacher und kostensparender Weise das Rückschlagventil dadurch gebildet, daß die Bohrung als Stufenbohrung ausgebildet ist und mindestens einen Bereich größeren und einen Bereich kleineren Durchmessers aufweist und eine Kugel aufnimmt, die entgegen der Wirkung der gegen das Ventil am Ablaß anliegenden Feder in den Bereich der Bohrung mit dem größeren Durchmesser verschiebbar ist, wobei die Kugel einen kleineren Durchmesser aufweist als die Bohrung in dem Bereich mit dem größeren Durchmesser. Dieses Rückschlagventil kommt mit relativ wenigen und leicht zu fertigenden Teilen aus.

Erfindungsgemäß ist ferner zur Führung der Feder vorgesehen, daß sich in Richtung der Längsmittelachse der Bohrung ein mit dem den Ablaß verschließenden Ventil verbundener Stift erstreckt, auf dem die Feder geführt ist.

Die Verbindung zwischen dem Druckraum und dem Einlaß bei Druckspitzen wird auf einfache Art erfindungsgemäß dadurch erreicht, daß das Rückschlagventil entgegen der Wirkung einer weiteren Feder und in Abhängigkeit von dem in dem Druckraum herrschenden Druck in eine die Verbindung des Druckraumes mit dem Einlaß zulassende Offenstellung bringbar ist, wobei das Rückschlagventil eine Längsbohrung aufweisen kann, die einenends, und zwar an dem dem Ablaß abgelegenen Ende des Rückschlagventils, über eine von der weiteren Feder beaufschlagte weitere Kugel verschließbar ist.

Das Rückschlagventil wird nach einem weiteren Merkmal der Erfindung dadurch sicher in seiner schließenden Stellung gehalten, daß die Feder in der Längsbohrung geführt ist.

Gemäß eines weiteren Vorschlags nach der Erfindung wird das Abströmenlassen von sich im Druckraum befindlicher Flüssigkeit beim Auftreten von Druckspitzen dadurch ermöglicht, daß in dem Bereich der Bohrung mit dem kleineren Durchmesser ein weiterer Bereich größeren Durchmessers vorgesehen ist, in den die Kugel entgegen der Wirkung der weiteren Feder verschiebbar ist, wobei sich die weitere Feder nur so weit zusammenpressen läßt, daß die Kugel nicht über den weiteren Bereich größeren Durchmessers hinaus bewegt werden kann. Somit ist ein Vorbeiströmen von Flüssigkeit an der Kugel, wenn diese sich in dem weiteren Bereich der Bohrung mit dem größeren Durchmesser befindet, sichergestellt.

Das Rückschlagventil ermöglicht nach einem weiteren Merkmal der Erfindung bereits eine zuverlässige Abdichtung zwischen dem Druckraum und dem Einlaß, wenn die Kugel aus elastischem Material besteht und einen Durchmesser aufweist, der größer ist als der Innendurchmesser der Bohrung in ihrem Bereich mit dem kleineren Durchmesser.

Das Öffnen des Rückschlagventils bei unterschiedlichen Drükken wird erfindungsgemäß dadurch erreicht, daß die Feder und die weitere Feder unterschiedliche Federkonstanten aufweisen.

In der Zeichnung sind zwei nachfolgend näher beschriebene Ausführungsbeispiele der Erfindung dargestellt. Es zeigt:
Fig. 1 eine Kupplungshälfte mit einer in dieser eingesetzten Schlauchkupplungshälfte in einem Betriebszustand und im Schnitt,
Fig. 2 die Kupplungshälfte ohne eingesetzte Schlauchkupplungshälfte in einem anderen Betriebszustand und ebenfalls im Schnitt,
Fig. 3 eine Vorderansicht in vergrößerter Darstellung eines in der Kupplungshälfte eingebauten Ablaßventils,
Fig. 4 eine Seitenansicht des Ablaßventils,
Fig. 5 eine weitere Kupplungshälfte in einem Betriebszustand und im Schnitt,

Fig. 6 die obere Hälfte der weiteren Kupplungshälfte in einem anderen Betriebszustand, den sie einnimmt, wenn eine nicht gezeigte Schlauchkupplungshälfte eingesetzt ist, und im Schnitt,

Fig. 7 die obere Hälfte der weiteren Kupplungshälfte in einem anderen Betriebszustand und im Schnitt,

Fig. 8 die obere Hälfte der weiteren Kupplungshälfte in einem weiteren Betriebszustand und im Schnitt und

Fig. 9 die obere Hälfte der weiteren Kupplungshälfte in wieder einem anderen Betriebszustand und im Schnitt.

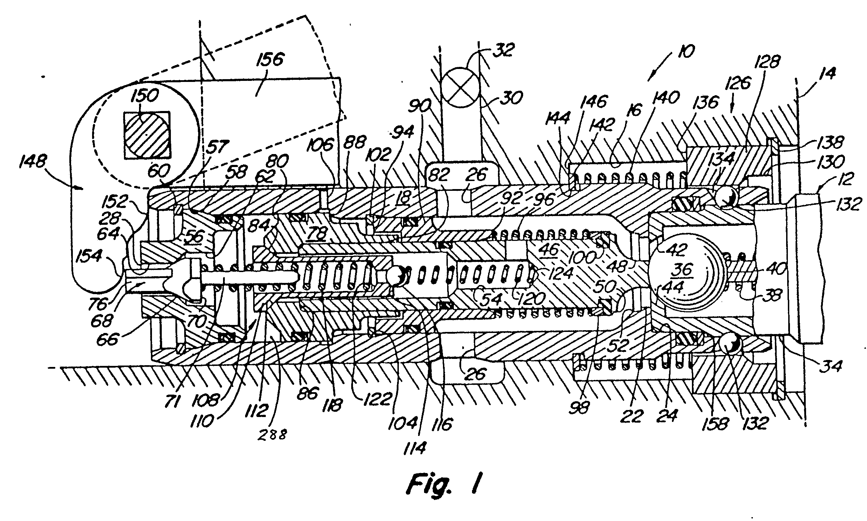

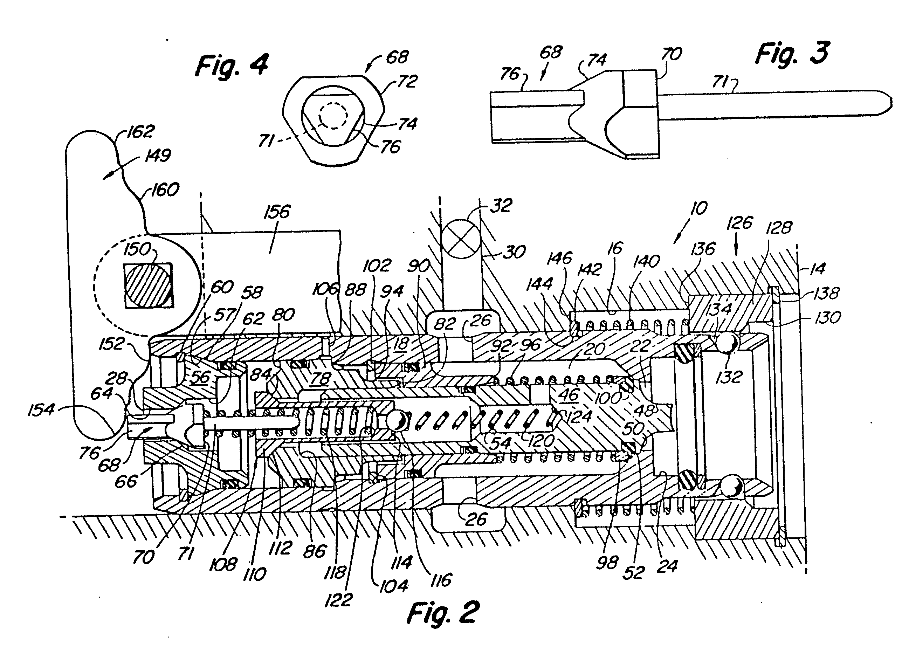

Aus Fig. 1 ist eine Kupplungshälfte 10 ersichtlich, die mit einer zweiten Kupplungshälfte, die im folgenden als Schlauchkupplungshälfte 12 bezeichnet wird, verbunden ist. Derartige Kupplungshälften 10 und Schlauchkupplungshälften 12 sind bekannte und gewöhnliche Bestandteile von landwirtschaftlichen Maschinen, und sie sind dort normalerweise in Paaren angeordnet, um eine hydraulische Verbindung zwischen einer Druckquelle und den Enden eines Arbeitszylinders herzustellen. Angaben wie oben, unten, rechts und links beziehen sich jeweils auf die Darstellung in der Zeichnung und dienen nicht einer einschränkenden Erläuterung der Erfindung. Die Kupplungshälfte 10 weist ein Gehäuse 14 auf, in dem sich eine vorzugsweise an beiden Enden offene Bohrung 16 befindet. In dieser Bohrung 16 ist eine ebenfalls die Funktion eines Gehäuses wahrnehmende Steckhülse 18 beweglich angeordnet, die einen Hohlraum 20 und eine Verbindungsöffnung 22, die als Durchgang dient und welche sich zu einer Einstecköffnung 24 hin öffnet, enthält. Der Hohlraum 20 ist vorzugsweise mittig in der Steckhülse 18 angeordnet, während sich die Einstecköffnung 24 an deren rechten Ende befindet. Flüssigkeit kann in den und aus dem Hohlraum 20 durch einen Einlaß oder Zulauf 26 und einen Ablaß 28 geleitet werden. Der Zulauf 26 steht mit einer Leitung 30 in Verbindung, die von einem Ventil 32 durchquert wird, das die Strömung von unter Druck stehender Flüssigkeit in den und gegebenenfalls auch aus dem Hohlraum 20 reguliert. Wie aus den Figuren 1 und 2 entnommen werden kann, kann der Zulauf 26 sowohl aus einer einzelnen Öffnung als auch aus einer Vielzahl von Öffnungen, die auf dem Umfang der Steckhülse 19 angeordnet sind, bestehen. Während der Zulauf 26 eine Strömung der Flüssigkeit in jeder Richtung zuläßt, ist der Ablaß 28 hauptsächlich eine Auslaßöffnung, die einen Flüssigkeitsstrom aus dem Hohlraum 20 zu einem in der Zeichnung nicht dargestellten Vorratsbehälter ermöglicht, von wo aus die dahin abgegebene Flüssigkeit dann wiederum in den Hydraulikkreislauf, in dem die Kupplungshälfte angeordnet ist, zurückgeführt werden kann.

Es wird nun Bezug genommen auf die Schlauchkupplungshälfte 12, die in die Einstecköffnung 24 eingesetzt werden kann, und man erkennt, daß sie hierzu ein Verschließelement 34 in Form eines Sperrventils besitzt. Dieses Verschließelement 34 besteht aus einer Ventilkugel 36, einer Druckfeder 38, einem Anschlag 40 und einem Ventilsitz 42, wobei die Ventilkugel 36 zwischen dem Ventilsitz 42 und dem Anschlag 40 angeordnet ist und normalerweise durch die Druckfeder 38 in eine schließende Stellung gegen den Ventilsitz 42 gedrückt wird. Das Verschließelement 34 ist in ein Ende eines nicht gezeichneten Hydraulikschlauches eingesetzt, der anderenends an ein Hydraulikaggregat anschließt, beispielsweise einen Hydraulikzylinder mit einem beweglichen Hydraulikkolben darin. Bei einer Bewegung des Hydraulikkolbens in dem Hydraulikzylinder findet sodann ein Flüssigkeitsfluß durch die Hydraulikschläuche statt. Es soll hier festgehalten werden, daß der Anschlag 40 als eine Begrenzung der nach rechts gerichteten Bewegung der Ventilkugel 36 dient.

In den Hohlraum 20 ist ein als Hauptschließelement 46 bezeichneter Kolben beweglich eingesetzt, welches vorzugsweise als Hülsenventil ausgebildet ist. An dem rechten Ende des Hauptschließelementes 46 ist ein länglicher Stößel 48 angebracht, der sich durch die Verbindungsöffnung 22 erstreckt und bis in die Einstecköffnung 24 reicht, wenn sich das Hauptschließelement 46 in der in Fig. 2 dargestellten schließenden Position befindet. Unmittelbar links neben dem länglichen Stößel 48 und an die Mantelfläche des Hauptschließelementes 46 angeformt befindet sich eine konische Dichtfläche 50, welche mit einem inneren Ventilsitz 52, der neben der linken Manteloberfläche der Verbindungsöffnung 22 angebracht ist, in Kontakt stehen kann. Wenn die konische Dichtfläche 50 gegen den inneren Ventilsitz 52 zur Anlage kommt, ist die Verbindungsöffnung 22 blockiert. In der blockierten Stellung befindet sich das Hauptschließelement 46 in seiner Stellung ganz rechts, wie sie aus Fig. 2 ersichtlich ist. Das Hauptschließelement 46 beinhaltet ebenfalls einen von einer Bohrung gebildeten Durchlaufkanal 54, welcher eine Flüssigkeitsverbindung zwischen dem Zulauf und dem Ablaß herstellt.

Links des Hauptschließelementes 46 befindet sich der Ablaß 28, der vorzugsweise einen runden Querschnitt aufweist und der axial mit der verlängerten Mittelachse der Steckhülse 18 fluchtet. Dieser Ablaß oder Auslaßöffnung 28 ist in einem Endstück 56 vorgesehen, das eine ringförmige kegelige Oberfläche 57 aufweist und, wie dies aus Fig. 1 ersichtlich ist, gegen eine entsprechend ausgebildete konische, ringförmige Innenfläche 58 der Steckhülse 18 zur Anlage kommt und von einem Sicherungsring 60 gehalten wird. Selbstverständlich sind auch andere Methoden der Befestigung des Endstückes 58 in der Steckhülse 18 anwendbar. Der Ablaß 28 ist so geformt, daß er zwei unterschiedliche Innendurchmesser 62 und 84 aufweist, die über einen geneigt oder schräg verlaufenden Ventilsitz 66 miteinander verbunden sind. Der kleinere der beiden Innendurchmesser 64 ist in dem linken bzw. dem äußeren Teil des Endstückes 56 angeordnet.

In den Ablaß 28 ist ein mit Ablaßventil 68 bezeichnetes Ventil eingesetzt, das zwischen einer schließenden und einer öffnenden Stellung bewegbar ist. Das Ablaßventil 68, welches vorzugsweise als Kegelventil ausgebildet ist, ist am besten aus den Figuren 3 und 4 entnehmbar und weist eine ganz spezielle Form auf. Wie dort gezeigt, weist das Ablaßventil 68 die Form eines Kopfes mit einer flachen rechten Oberfläche 70 auf, von der sich ein länglicher Stift 71 aus nach rechts erstreckt. Die rechte Hälfte des Kopfes des Ablaßventils 68 ist vorzugsweise im Querschnitt dreiecksförmig ausgebildet und besitzt abgerundete Ecken 72, wie dies Fig. 4 zu entnehmen ist. Daran angepaßt und sich nach links von den abgerundeten Ecken 72 fort erstreckend ist ein runder konusförmiger Abschnitt 74 vorgesehen, der sich in einen verlängerten dreiecksförmigen länglichen Stößel 78 verjüngt. Der konusförmige Abschnitt 74 bildet eine Gegenfläche zu dem geneigten Ventilsitz 66, der an dem Endstück 56 angeformt ist. Es sei darauf hingewiesen, daß, obwohl der längliche Stößel 76 und die flache rechte Oberfläche 70 eine dreiecksförmige Querschnittsgestalt aufweisen, auch andere Querschnittsformen möglich und anwendbar sind.

In den Hohlraum 20 zwischen dem Zulauf 26 und dem Ablaß 28 ist ein beweglicher weiterer Kolben 78 eingesetzt. Dieser ist von hülsenförmiger Gestalt und befindet sich in gleitendem Eingriff mit der äußeren Fläche des Hauptschließelementes 46 und mit der inneren Oberfläche der Steckhülse 18. Er besitzt eine linke Stirnfläche 80 und eine rechte Stirnfläche 82, und an seinem inneren Umfang sind eine kegelige Fläche 84 und eine Schulter 88 angebracht. Sobald Flüssigkeit durch den Durchlaufkanal 54 des Hauptschließelementes 46 strömt und die linke Stirnfläche 80 des Kolbens 78 beaufschlagt, wird dieser nach rechts bewegt. Das Ausmaß der nach rechts gerichteten Bewegung des Kolbens 78 wird von einem Anschlag 88 begrenzt, der an die innere Fläche der Steckhülse 18 angebracht ist, während die nach links gerichtete Bewegung des Kolbens 78 durch die Berührung mit dem Endstück 56 begrenzt wird.

Ein Ringteil 90, das einen Teil des Hauptschließelementes 46 umgibt, ist ebenfalls in den Hohlraum 20 eingesetzt und weist eine rechte Stirnwandung 92 und eine linke Stirnfläche 94 auf. Die rechte Stirnwandung 92 befindet sich in ständiger Berührung mit einer als Druckfeder 96 wirkenden Feder, welche einen Teil des Hauptschließelementes 46 umfaßt. Die Druckfeder 96 liegt an einem Sicherungsring 98 an, welcher nahe eines Dichtringes 100 eingesetzt ist, und beide sind vorzugsweise in der Nähe des Fußes des länglichen Stößels 48 vorgesehen. Die linke Stirnfläche 94 des Ringteils 90 liegt an einem Sicherungsring 102 an, der in eine Ringnut 104, welche in die Innenfläche der Steckhülse 18 eingearbeitet ist, eingesetzt ist. Die Verbindung der Druckfeder 96 und des Sicherungsringes 102 dient dazu, die Bewegung des Ringteils 90 zu begrenzen. Außerdem drängt die Druckfeder 96 das Hauptschließelement 46 nach rechts, so daß die konische Dichtfläche 50 zur Anlage gegen den inneren Ventilsitz 52 kommt, wie dies Fig. 2 entnommen werden kann. Die Druckfeder sollte so ausgebildet sein, daß sie eine ausreichende Federkraft ausübt, um das Hauptschließelement 46 in eine schließende Stellung bringen zu können, um somit eine Strömung von Flüssigkeit durch die Verbindungsöffnung 22 zu unterbinden, wenn die Schlauchkupplungshälfte 12 nicht in die Einstecköffnung 24 eingesetzt ist.

In den Figuren 1 und 2 ist zusätzlich eine Entlastungsbohrung 106 erkennbar, die in der Steckhülse 18 links des Ringteils 90 angeordnet ist und einen Ausgang für jegliche Flüssigkeit bildet, die zwischen dem Kolben 78 und dem Ringteil 90 eingeschlossen werden kann. Vorteilhafterweise wird die Flüssigkeit, die durch die Entlastungsbohrung 108 entweicht, wieder zurück zu dem Vorratsbehälter geführt, so daß sie wieder weiterbenutzt werden kann.

Die Kupplungshälfte 10 enthält ferner ein Rückschlagventil 108, das in dem Hohlraum 20 zwischen dem Zulauf 26 und dem Ablaß 28 gelegen ist. Das Rückschlagventil 108 enthält ein hohl ausgebildetes Kegelventil 110 mit einem ersten Ventilsitz 112, der nahe von einem Ende angeordnet ist, das mit der kegeligen Fläche 84, die an dem Kolben 78 angeformt ist, zur Anlage bringbar ist. Das Rückschlagventil 108 besitzt außerdem einen zweiten Ventilsitz 114, der an dem gegenüberliegenden Ende davon angeordnet ist. Eine Ventilkugel 116 paßt in den zweiten Ventilsitz 114, um so Flüssigkeit von dem linken Ende des Hohlraumes 20 durch den Innenteil des hohlen Kegelventils 110 abströmen lassen zu können. Der Raum zwischen dem Ablaß 28 und dem Hauptschließelement 46 kann als Druckraum bezeichnet werden. Dieser Abströmvorgang geschieht allerdings nur, wenn Flüssigkeit in dem linken Ende des Hohlraumes 20 aufgrund von Wärmeausdehnungen einen immer größer werdenden Flüssigkeitsdruck erfährt, der schließlich einen vorbestimmten Wert übersteigt. Das Rückschlagventil 108 wird innerhalb des Hohlraumes 20 von einer ersten und einer zweiten weiteren Feder 118 und 120 beaufschlagt, wobei die erste Feder 118 eine größere Federkraft aufweist und zwischen der flachen rechten Oberfläche 70 des Ablaßventils 68 und einer inneren Schulter 122 des hohlen Kegelventils 110 angeordnet ist. Die erste Feder 118 wird davor bewahrt, um ein beträchtliches Maß auszuknicken, und zwar zum einen durch den länglichen Stift 71, welcher sich von dem Ablaßventil 68 fort erstreckt, und zum anderen von der inneren Oberfläche des hohlen Kegelventils 110.

Die zweite Feder 120 ist in dem Durchlaufkanal 54 des Hauptschließelementes 46 angeordnet und ist zwischen einer Endseite 124 des Durchlaufkanales 54 und der Ventilkugel 116 eingesetzt. Das Rückschlagventil 108 ist normalerweise in eine geschlossene Stellung vorgespannt, in der der erste Ventilsitz 112 mit der kegeligen Fläche 84 zusammenfällt, und die Ventilkugel 116 verbleibt auf dem zweiten Ventilsitz 114 und blockiert somit einen Flüssigkeitsfluß dort hindurch.

Das Rückschlagventil 108 gewährleistet, daß der die linke Stirnfläche 80 des Kolbens 78 beaufschlagende Druck stets entweder gleich groß oder größer als der Flüssigkeitsdruck in dem Rest des Hohlraumes 20 ist. Dies wird dadurch erreicht, daß es der Flüssigkeit ermöglicht wird, durch den Durchlaufkanal 54 hindurch in das linke Ende des Hohlraumes 20 zu gelangen, und diese Flüssigkeit dort dann so eingeschlossen wird, daß sie die nach links gerichtete Bewegung des Hauptschließelementes 46 begrenzt, nachdem die Verbindungsöffnung 22 geöffnet ist. Sollte sich der Druck der Flüssigkeit in dem linken Ende des Hohlraumes 20 aufgrund von Wärmeeinwirkungen und der damit verbundenen Volumenausdehnung vergrößern, dann wird die Ventilkugel 116 von dem zweiten Ventilsitz 114 abgehoben, um somit ein teilweises Abströmen der Flüssigkeit zu ermöglichen. Es ist dabei darauf zu achten, daß die Kraft, die dazu benötigt wird, um die Kugel 116 von ihrem zweiten Ventilsitz 114 abzuheben, viel größer ist als die Druckkraft, die in dem linken Ende des Hohlraumes 20 lediglich durch das Bewegen des Hauptschließelementes 46 nach links aufgebaut werden kann. Somit ist gewährleistet, daß die Ventilkugel 116 aufgrund von Wärmeeinwirkungen sich ausdehnende unter Druck stehende Flüssigkeit entlastet.

Die Fähigkeit der Ventilkugel 116, unter Druck stehende Flüssigkeit von dem linken Ende des Hohlraumes 20 abzulassen, wenn Wärmeausdehnungen oder vorübergehende Druckspitzen oberhalb einer gewünschten Druckgrenze auftreten, bietet Gewähr dafür, daß die Steuernockenbetätigung eines Hebelarms 156 das Ablaßventil 88 auch bei einem hohen Druck an dem Ablaßventil öffnen kann. Wenn der Druck an dem linken Ende des Hohlraumes 20 aufgrund von Wärmeausdehnungen übermäßig ansteigen würde und keine Mittel vorgesehen wären, um den angestiegenen Druck abzubauen, könnte das Ablaßventil 68 nicht geöffnet werden und die Schlauchkupplungshälfte 12 würde unter Druck aus der Einstecköffnung 24 ausgestoßen werden.

Durch die Vorkehrung des Rückschlagventils 108 in der Kupplungshälfte 10 und durch dessen Ausbildung derart, daß es den Flüssigkeitsfluß nach links unter einem Druckniveau hält, das niedriger ist als das Druckniveau, bei dem es den nach rechts gerichteten Flüssigkeitsfluß auslöst, ist es sicher, daß die Ventilkugel 36 nicht in eine schließende Stellung durch eine Druckwelle während der Zeit, in der sie mit der Kupplungshälfte 10 verbunden ist, gebracht wird. Dies ist wichtig, da es bedeutet, daß, falls das Ventil 32 momentan geschlossen werden sollte, während die Verbindungsöffnung 22 offen ist, und zu einem Zeitpunkt, zu dem ein Unterdruck in dem Hohlraum 20 der Kupplungshälfte 10 entsteht, die Ventilkugel 36 nicht gegen ihren Ventilsitz 42 zur Anlage kommen wird. Die Verbindungsöffnung 22 zwischen der Kupplungshälfte 10 und der Schlauchkupplungshälfte 12 bleibt offen, da die Ventilkugel 36 das Hauptschließelement 46 nicht nach links bewegen kann, und zwar aufgrund des die linke Stirnfläche 80 des Kolbens 78 beaufschlagenden Druckes. Durch den Gebrauch des Rückschlagventils 108 in jedem der Paare der Kupplungshälften 10, wenn man von einem Doppelsteuergerät ausgeht, kann man sicher sein, daß, wenn einmal das Ventil 32 für jede Kupplungshälfte 10 in eine öffnende Stellung gebracht worden ist, wobei die Richtung des Flüssigkeitsflusses belanglos ist, Flüssigkeit in jedes und aus jedem Hydraulikaggregat geführt werden kann.

Umfangsmäßig um das rechte Ende der Steckhülse 18 ist ein Kupplungselement 126 angeordnet, das dazu dient, die Schlauchkupplungshälfte 12 in der Einstecköffnung 24 zu halten, und das eine Buchse 128 mit einem ringförmigen Innenraum 130 beinhaltet. Die Seiten des ringförmigen Innenraumes 130 sind vorzugsweise abgeschrägt, um die Aufnahme von Kupplungskugeln 132 zu vereinfachen, die in Ausnehmungen 134 ganz rechts am Ende der Steckhülse 18 untergebracht sind. Die Buchse 128 wird in dem Gehäuse 14 durch eine Schulter 136 und einen Sicherungsring 138 festgehalten.

Eine Druckfeder 140 ist zwischen der Buchse 128 und einem weiteren Sicherungsring 142 eingesetzt, wobei der Sicherungsring 142 in einer in die äußere Fläche der Steckhülse 18 eingearbeiteten Nut 144 gehalten wird und normalerweise an einer Schulter 146, die in dem Gehäuse 14 angeformt ist, aufgrund der Kraft und der Wirkung der Druckfeder 140 anliegt.

Um die Steckhülse 18 nach rechts entgegen der Kraft der Druckfeder 140 zu bewegen, ist ein Nockenhebel 148 vorgesehen, der an dem Gehäuse 14 durch einen Stift 150 schwenkbar gehalten wird und einen ersten und einen zweiten Nocken 152 und 154 und den Hebelarm 156 aufweist. Zur Vereinfachung wird der Hebelarm 156 als sich anfänglich in einer horizontalen Ebene befindend beschrieben, aus welcher heraus er anhebbar ist. Durch das Anheben des Hebelarms 156 in eine in Fig. 1 gestrichelt angedeutete Stellung wird der erste Nocken 152 in Berührung mit dem linken Ende der Steckhülse 18 gebracht. Sobald der erste Nocken 152 die Steckhülse 18 nach rechts drückt, rollen die Kupplungskugeln 132 teilweise aus den Ausnehmungen 134 in den ringförmigen Innenraum 130, wodurch ein ungehinderter Weg geschaffen ist, so daß die Schlauchkupplungshälfte 12 in die Einstecköffnung 24 eingesteckt werden kann. In dieser Stellung ist die Druckfeder 140 gespannt und übt eine nach links gerichtete Kraft auf die Steckhülse 18 über den Sicherungsring 142 aus. Die Steckhülse 18 wird daher in ihre anfängliche Stellung zurückkehren, sobald der Hebelarm 156 wieder abgelassen worden ist.

Wenn der Hebelarm 156 weiter angehoben wird, wird der zweite Nocken 154 den länglichen Stößel 76 des Ablaßventils 88 berühren und dieses nach rechts in eine öffnende Stellung bewegen. Vorzugsweise wird das Ablaßventil 68 öffnen, bevor die Kupplungskugeln 132 in den ringförmigen Innenraum 130 gelangen. Bedingt durch den nunmehr geöffneten Ablaß 28 kann jede Flüssigkeit, die sich links der Ventilkugel 116 befindet, abströmen. Dies gewährleistet, daß nur eine kleine Menge nicht unter Druck stehender Flüssigkeit links der Ventilkugel 116 verbleiben wird und deshalb das Hauptschließelement 46 frei ist, sich nach links zu bewegen, wenn die Schlauchkupplungshälfte 12 in die Einstecköffnung 24 eingesteckt wird. Es wird hierbei darauf hingewiesen, daß die Schlauchkupplungshälfte 12 mit einer Hand eingeführt werden kann, während die andere Hand den Hebelarm 156 in seiner oberen Stellung festhält. Sobald der Hebelarm 156 abgesenkt wird, bewegen sich die Nocken 152 und 154 nach links, also fort von der Steckhülse 18 bzw. dem länglichen Stößel 76 des Ablaßventils 88. Die Steckhülse 18 bewegt sich gleichzeitig aufgrund der Kraft der Druckfeder 140 ebenfalls nach links. Wie sich die Steckhülse 18 nach links bewegt, schließt das Ablaßventil 68 wegen der Kraft der Druckfedern 118 und 120, und die Kupplungskugeln 132 rollen aus dem ringförmigen Innenraum 130 zurück in ihre Ausnehmungen 134. Dort liegen sie an einem Rand 158, der an dem äußeren Umfang der Schlauchkupplungshälfte 12 angearbeitet ist, an und halten die Schlauchkupplungshälfte 12 ausreichend in der Einstecköffnung 24 fest.

Eine andere Ausführungsform eines Nockenhebels 149 ist Fig. 2 zu entnehmen, in der vier Nocken, die mit 152, 154, 160 und 162 bezeichnet sind, vorgesehen sind. Mit dieser Ausführungsform ist es möglich, zwei Kupplungshälften 10, von denen jedoch nur eine dargestellt ist, mit nur einem Hebelarm 156 zu betätigen. Bedingt durch diese Anordnung wird eine Bewegung des Hebelarms 156 über die Horizontalebene die untere in Fig. 2 ersichtliche Kupplungshälfte 10 betätigen, während eine Bewegung des Hebelarms 156 unter die Horizontalebene die obere nicht gezeichnete Kupplungshälfte betätigt. Andere Aufbauten und Vorrichtungen sind ebenfalls denkbar. Der Hauptzweck der Nockenhebel 148 oder 149, die manuell oder automatisch bedient werden können, ist es, das Kuppeln und Entkuppeln einer Kupplungshälfte 10 mit einer Schlauchkupplungshälfte 12 zu vereinfachen. Die Nockenhebel 148 bzw. 149 erfahren an Wichtigkeit, wenn die Schlauchkupplungshälfte 12 sich in einem unter Druck stehenden Zustand befindet, wie dies noch erläutert wird.

Zahlreiche Dichtungen wie O-Ringe und Teflonringe werden in der Kupplungshälfte 10 verwendet, um Leckagen zwischen den einzelnen Teilen zu vermeiden. Diese Dichtungen wurden jedoch der Einfachheit halber in der Beschreibung nicht erwähnt und können von einem Fachmann auch an den entsprechenden Stellen ohne eine weitere Anleitung eingebaut werden.

Im folgenden wird auf das Verfahren zum Kuppeln einmal einer unter Druck stehenden und einmal einer drucklosen Schlauchkupplungshälfte 12 an die Kupplungshälfte 10 anhand des Vorbeschriebenen eingegangen. Diese Beschreibung geht davon aus, daß ein Paar von Kupplungshälften 10 über Hydraulikschläuche mit den jeweils gegenüberliegenden Enden eines einen beweglichen Kolben aufweisenden Hydraulikzylinders verbunden ist, wobei sich der Kupplungsvorgang auf diejenige Kupplungshälfte 10 bezieht, die mit dem kolbenstangenseitigen Ende des Hydraulikzylinders verbunden ist. Die Flüssigkeit fließt dabei von dem kolbenstangenseitigen Ende des Hydraulikzylinders durch die Kupplungshälfte 10 in einen Vorratsbehälter.

Um eine nicht unter Druck stehende Schlauchkupplungshälfte 12 mit der Kupplungshälfte 10 zu verbinden, ist wie folgt zu verfahren. Ausgehend von dem sich in einer schließenden Stellung befindlichen Hauptschließelement 46, wie dies in Fig. 2 veranschaulicht ist, und von einem geschlossenen Ventil 32, so daß keine Flüssigkeit aus dem Hohlraum 20 ausfließen kann, wird der Hebelarm 156 nach oben bewegt. Diese Bewegung führt dazu, daß der Nocken 152 das linke Ende der Steckhülse 18 berührt und beginnt, diese nach rechts zu bewegen. Wenn der Hebelarm 156 weiter nach oben bewegt wird, kommt der zweite Nocken 154 an dem länglichen Stößel 76 des Ablaßventils 88 zur Anlage und schiebt diesen nach rechts in eine öffnende Stellung. Dadurch wird es der eingeschlossenen Flüssigkeit, die sich links der Ventilkugel 116 befindet, ermöglicht, zu dem Vorratsbehälter hin zu entweichen. Ein weiteres Anheben des Hebelarms 156 bewirkt, daß die Kupplungskugeln 132 und die Ausnehmungen 134 in Deckung zueinander geraten, wodurch die Kupplungskugeln 132 teilweise aus den Ausnehmungen 134 in den ringförmigen Innenraum 130 rollen, so daß die Schlauchkupplungshälfte 12 einen ungehinderten Eintritt in die Einstecköffnung 24 hat. Zur gleichen Zeit wird durch die nach rechts gerichtete Bewegung der Steckhülse 18 die Druckfeder 140 gespannt, um somit eine Kraft aufzubauen, die dazu genutzt wird, die Steckhülse 18 wieder nach links zu verschieben, wenn der Hebelarm 156 abgelassen wird.

Danach wird die Schlauchkupplungshälfte 12 in die Einstecköffnung 24 mit einer Hand eingesteckt, während mit der anderen Hand der Hebelarm 156 oben gehalten wird. Wenn die Schlauchkupplungshälfte 12 einmal eingesetzt ist, wird sie in ihrer Stellung gehalten und der Hebelarm 156 in seine ursprüngliche Stellung zurückgebracht, was zu einem Fortbewegen der Nocken 152 und 154 von der Steckhülse 18 und dem Ablaßventil 68 führt. Gleichzeitig drängt die Druckfeder 140 die Steckhülse 18 nach links. Dadurch gelangen die Kupplungskugeln 132 zurück in ihre Ausnehmungen 134 und berühren kräftig die Umfangsfläche des Verschließelementes 34, und zwar in Fig. 1 gleich rechts des Randes 158. Diese kraftvolle Berührung ist ausreichend, um die Schlauchkupplungshälfte 12 in Eingriff mit der Einstecköffnung 24 zu halten.

Wenn die Schlauchkupplungshälfte 12 in die Einstecköffnung 24 eingesetzt wird, berührt der längliche Stößel 48 des Hauptschließelementes 46, das von der Druckfeder 96 nach rechts gedrückt wird, die Ventilkugel 36 und drückt diese nach rechts weg von ihrem Ventilsitz 42, die dann so lange die Druckfeder 38 spannt, bis sie den Anschlag 40 berührt. Die Kraft der Druckfeder 96, die auf das Hauptschließelement 46 der Kupplungshälfte 10 wirkt, ist viel größer als die Kraft der Druckfeder 38, die auf die Ventilkugel 36 wirkt. Dadurch, daß die Ventilkugel 36 an dem Anschlag 40 anschlägt, wird bei einem weiteren Einschieben der Schlauchkupplungshälfte 12 in die Einstecköffnung 24 das Hauptschließelement 46 weiter nach links bewegt und spannt dabei die Druckfedern 96, 118 und 120, was zu einem Fortbewegen der konischen Dichtfläche 50 von dem Ventilsitz 52 und somit zu einem Öffnen der Verbindungsöffnung 22 führt. Ein Flüssigkeitsfluß durch diese Verbindungsöffnung 22 ist möglich, sobald das Ventil 32 zu dem Vorratsbehälter hin geöffnet wird.

Ist das Ventil 32 geöffnet, dann strömt die Flüssigkeit von der Schlauchkupplungshälfte 12 einmal durch den Zulauf 26 zu dem Vorratsbehälter und zum zweiten auch durch den Durchlaufkanal 54 zu dem linken Ende des Hohlraumes 20, was jedoch nur dann möglich ist, wenn der durch die zurückströmende Flüssigkeit sich in dem Hohlraum 20 aufbauende Flüssigkeitsdruck ausreichend groß ist, um das Rückschlagventil 108 von dem Ventilsitz 112 abzuheben. Die dem linken Ende des Hohlraumes 20 zufließende Flüssigkeit wird davon abgehalten, durch den Ablaß 28 auszutreten, da das Ablaßventil 88 aufgrund der Kraft der Federn 118 und 120 geschlossen ist. Dies bedeutet, daß sich in dem linken Ende des Hohlraumes 20 durch den Flüssigkeitsdruck ein gewünschtes Druckniveau aufbauen wird, das verursacht, daß der Kolben 78 nach rechts bis zu seiner Berührung mit dem Anschlag 88 gedrängt wird. Das Rückschlagventil 108 wird bereits durch die Kraft der Druckfeder 118, die auf die innere Schulter 122 wirkt, nach rechts vorgespannt. Wenn einmal das Rückschlagventil 108 mit seiner kegeligen Fläche 84 auf dem Ventilsitz 112 aufsitzt, kann kein weiterer Flüssigkeitsfluß in das linke Ende des Hohlraumes 20 stattfinden. Von diesem Zeitpunkt an wird die gesamte von der Schlauchkupplungshälfte 12 kommende Flüssigkeit durch die Kupplungshälfte 10 dem Vorratsbehälter zugeleitet. Der Kuppelvorgang ist damit beendet.

Um in einem drucklosen Zustand die Kupplungshälfte 10 von der Schlauchkupplungshälfte 12 zu trennen, wird das Ventil 32 geschlossen und der Hebelarm 156 angehoben. Durch das Anheben des Hebelarms 158 wird die Steckhülse 18 teilweise nach rechts bewegt und das Ablaßventil 68 geöffnet, wodurch evtl. in dem linken Ende des Hohlraumes 20 eingeschlossene unter Druck stehende Flüssigkeit austreten kann. Mit dem Ausströmen dieser Flüssigkeit aus dem Hohlraum 20 bzw. dessen linken Ende bewegt sich auch das Hauptschließelement 46 zusammen mit dem Kolben 78 nach links und ermöglicht es so der Ventilkugel 36, sich auf ihren Ventilsitz 42 zu setzen. Das weitere Anheben des Hebelarmes 156 ermöglicht es den Kupplungskugeln 132, in den ringförmigen Innenraum 130 zu rollen und somit die Kraft, die die Schlauchkupplungshälfte 12 in der Einstecköffnung 24 hielt, abzubauen. Wenn nun die Schlauchkupplungshälfte 12 mit einer Hand nach rechts gezogen wird, wird das Hauptschließelement 46 der Kupplungshälfte 10 durch die Kraft der Druckfedern 96, 118 und 120 in seine schließende Stellung verschoben. Danach wird der Hebelarm 156 abgelassen und damit der Ablaß 28 geschlossen, womit der Vorgang des Abkuppelns beendet ist.

Der Vorgang zum Verbinden der Kupplungshälfte 10 mit einer unter Druck stehenden Schlauchkupplungshälfte 12 unterscheidet sich von dem zuvor beschriebenen dadurch, daß der nun höhere Flüssigkeitsdruck in der Schlauchkupplungshälfte 12 die Ventilkugel 36 davon abhält, sich bereits zu Beginn des Einführens in die Einstecköffnung 24 von ihrem Ventilsitz 42 abzuheben.

Zunächst wird das Ventil 32 geschlossen und der Hebelarm 156 angehoben, wobei die Steckhülse 18 teilweise nach rechts bewegt und das Ablaßventil 68 geöffnet wird. Evtl. in dem linken Ende des Hohlraumes 20 eingeschlossene Flüssigkeit kann somit durch den dann offenen Ablaß 28 ausströmen. Wird danach der Hebelarm 158 weiter nach oben bewegt, dann kann die Schlauchkupplungshälfte 12, ohne von den Kupplungskugeln 132 gehindert zu werden, in die Einstecköffnung 24 eingeschoben werden. Sobald die Ventilkugel 36 das Hauptschließelement 46 berührt, bewegt sie dieses bei gleichzeitigem Anliegen auf dem Ventilsitz 42 nach links, was bedeutet, daß die Schlauchkupplungshälfte 12 vollkommen in die Einstecköffnung 24 eingeführt werden kann, obwohl die Ventilkugel 36 auf dem Ventilsitz 42 aufsitzt. Zur gleichen Zeit wird das Hauptschließelement 46 nach links verschoben, wodurch es an die Schulter 86 des Kolbens 78 anstößt und diesen nach links schiebt. Um nun die Ventilkugel 36 von ihrem Sitz 42 anzuheben, muß der Flüssigkeitsdruck in der Steckhülse 18 gesteigert werden. Dies wird dadurch erreicht, daß der Hebelarm 156 abgesenkt und danach das Ventil 32 geöffnet wird, um unter Druck stehende Flüssigkeit zuzuführen. Dieser Flüssigkeit ist es dann möglich, durch den Durchlaufkanal 54 hindurch zu fließen, um das Rückschlagventil 108 von seinem Ventilsitz 112 fortzubewegen und dann an dem Rückschlagventil 108 vorbei zu dem linken Ende des Hohlraumes 20 zu gelangen. Der stetig bis zu einem bestimmten Wert ansteigende Flüssigkeitsdruck wirkt auf die linke Stirnfläche 80 des Kolbens 78. Wenn die dadurch entstehende Druckkraft zusammen mit den Kräften der Federn 96, 118 und 120 den gesamten Widerstand von der auf der rechten Seite der Ventilkugel 38 wirkenden Flüssigkeit, der Kraft der Druckfeder 38 und der auf die rechte Seite des Hauptschließelementes 46 wirkenden Kraft übertrifft, bewegt sich das Hauptschließelement 46 nach rechts und hebt damit die Ventilkugel 36 von ihrem Ventilsitz 42 ab. Dadurch wird die Verbindungsöffnung 22 geöffnet, und ein Flüssigkeitsfluß von der Kupplungshälfte 10 zu der Schlauchkupplungshälfte 12 kann stattfinden. Es soll hierbei bemerkt werden, daß der Flüssigkeitsdruck, der in der Kupplungshälfte 10 erforderlich ist, um die zuvor beschriebene Wirkung zu erreichen, bedeutend geringer ist als der in der Schlauchkupplungshälfte 12 anstehende Flüssigkeitsdruck.

Das Entkuppeln einer unter Druck stehenden Schlauchkupplungshälfte 12 erfolgt in der gleichen Weise wie das Entkuppeln der nicht unter Druck stehenden Schlauchkupplungshälfte 12, wie dies zuvor bereits beschrieben worden ist.

Im folgenden wird darauf eingegangen, wie es verhindert wird, daß die Ventilkugel 36 im angekuppelten Zustand den Flüssigkeitsdurchfluß zwischen der Kupplungshälfte 10 und der Schlauchkupplungshälfte 12 unterbricht. Die nun folgende Beschreibung des Rückschlagventils 108 geht dabei von einer Situation aus, in der das kolbenstangenseitige Ende des Hydraulikzylinders mit der erfindungsgemäßen Kupplungshälfte 10 verbunden ist und das Ventil 32 momentan geschlossen ist. Eine derartige Situation tritt normalerweise dann ein, wenn die zu dem Hydraulikaggregat gelieferte Flüssigkeit nicht weiter gefördert wird und der Hydraulikkolben in dem Hydraulikzylinder in seiner Bewegung verharrt. In einem solchen Fall bewirkt eine Bewegung eines Gerätes, an das der Hydraulikzylinder angebaut ist, daß sich der Hydraulikkolben in dem Hydraulikzylinder um einen geringen Betrag bewegt. Eine derartige Bewegung kann an dem kolbenstangenseitigen Ende des Hydraulikzylinders einen Unterdruck hervorrufen, der sich bis in die Kupplungshälfte 10 fortsetzt. Sobald aber das Ventil 32, das mit dem kolbenseitigen Ende des Hydraulikzylinders verbunden ist, geöffnet wird, entsteht eine Druckwelle an dem kolbenstangenseitigen Ende des Hydraulikzylinders, die sich bis in die Schlauchkupplungshälfte 12 fortpflanzt, und zwar derart, daß die Ventilkugel 36 versucht, sich auf ihren Ventilsitz 42 aufzusetzen. Dies wird aber mit der erfindungsgemäßen Kupplungshälfte 10 vermieden, weil das Rückschlagventil 108 einen Austritt von unter Druck stehender Flüssigkeit aus dem linken Ende des Hohlraumes 20 verhindert. Die einzige Flüssigkeit, die dort austreten könnte, ist die, die sich durch evtl. Wärmeausdehnungen ergibt. Es ist dabei zu beachten, daß der aufgrund der Wärmeausdehnungen in der Flüssigkeit entstehende Flüssigkeitsdruck 5 bis 8 mal größer ist als der maximale Flüssigkeitsdruck, der in der Schlauchkupplungshälfte 12 verfügbar ist, um das Hauptschließelement 46 nach links zu verschieben. Mit einem Flüssigkeitsdruck in dem linken Ende des Hohlraumes 20, der gleich oder größer als der sonst in der Kupplungshälfte 10 anstehende Flüssigkeitsdruck ist, wird das Hauptschließelement 46 notwendigerweise davon abgehalten, sich von der Stellung gemäß Fig. 1 nach links zu verschieben, was bedeutet, daß sich die Ventilkugel 36 nicht auf ihren Ventilsitz 42 aufsetzen kann und somit die Verbindungsöffnung 22 nicht geschlossen werden kann, solange die Schlauchkupplungshälfte 12 mit der Kupplungshälfte 10 verbunden ist.

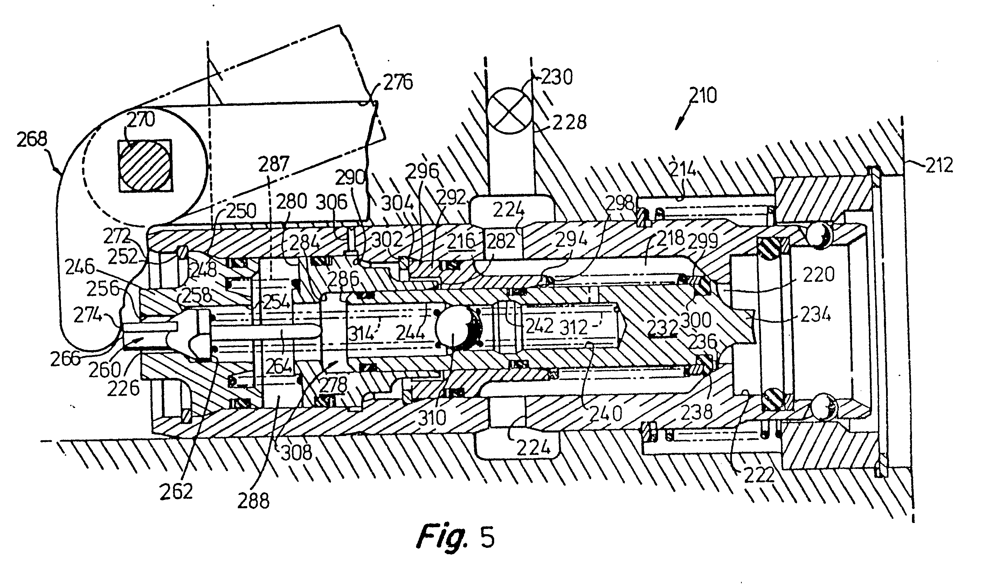

Die weitere Beschreibung bezieht sich auf eine alternative Ausführung zu der Kupplungshälfte 10, die in den Figuren 5 ff. abgebildet ist. Eine in Fig. 5 dargestellte Kupplungshälfte 210 weist ein Gehäuse 212 auf, das eine Bohrung 214 in sich beinhaltet, die vorzugsweise an jedem Ende offen ist. In der Bohrung 214 ist wiederum ein Gehäuse in Form einer Steckhülse 218 beweglich angeordnet, die einen Hohlraum 218 und einen Durchgang oder eine Verbindungsöffnung 220 beinhaltet, die sich zu einer Einstecköffnung 222 hin öffnet, in welche eine zweite nicht gezeigte Kupplungshälfte, die als Schlauchkupplungshälfte bezeichnet wird, eingesetzt werden kann, wie dies bei dem ersten Ausführungsbeispiel beschrieben worden ist. Vorteilhafterweise befindet sich der Hohlraum 218 in der Mitte der Steckhülse 216, während die Einstecköffnung 222 an deren rechten Ende vorgesehen ist. Flüssigkeit kann dem Hohlraum 218 durch einen Einlaß oder Zulauf 224 zu- und durch einen Ablaß 228 wieder abgeführt werden. Der Zulauf 224 steht in Verbindung mit einer Leitung 228, die von einem Ventil 230 durchquert wird, das den Fluß von unter Druck stehender Flüssigkeit in den und gegebenenfalls aus dem Hohlraum 218 steuert. Wie Fig. 5 zu entnehmen ist, kann der Zulauf 224 aus einer einzigen oder aus einer Vielzahl von Öffnungen bestehen, die in den Mantel der Steckhülse 216 eingearbeitet sind. Während der Zulauf 224 einen Flüssigkeitsstrom in jeder Richtung zuläßt, ist der Ablaß 226 lediglich als Ausgang vorgesehen, der einen Flüssigkeitsstrom aus dem Hohlraum 218 in den Vorratsbehälter zuläßt. Die in den Vorratsbehälter zurückgeführte Flüssigkeit kann dann wieder verwendet werden.

Innerhalb des Hohlraumes 218 befindet sich ein als bewegliches Hauptschließelement 232 bezeichneter Kolben, das vorzugsweise als Hülsenventil ausgebildet ist. An dem rechten Ende des Hauptschließelementes 232 ist ein länglicher Stößel 234 angearbeitet, der sich durch die Verbindungsöffnung 220 bis in die Einstecköffnung 222 erstreckt, wenn das Hauptschließelement 232 sich, wie in Fig. 5 gezeigt, in seiner schließenden Stellung befindet. Unmittelbar links des länglichen Stößels 234 ist an dem Mantel des Hauptschließelementes 232 eine konische Dichtfläche 236 angeformt, die mit einem inneren Ventilsitz 238, der nahe der linken Umfangsfläche der Verbindungsöffnung 220 angeordnet ist, zusammenpaßt. Wenn die konische Dichtfläche 236 gegen den inneren Ventilsitz 238 zur Anlage kommt, ist die Verbindungsöffnung 220 gesperrt, d. h. das Hauptschließelement 232 befindet sich in seiner Stellung ganz rechts. Das Hauptschließelement 232 weist außerdem einen von einer Bohrung gebildeten Durchlaufkanal 240 auf, der für eine Flüssigkeitsverbindung zwischen dem Zulauf 224 und dem Ablaß 226 sorgt, wie dies später noch beschrieben wird. Ein Paar Ausnehmungen 242 und 244 sind an der inneren Umfangsfläche des Durchlaufkanals 240 eingearbeitet und unterteilen den Durchlaufkanal in Bereiche größeren 242, 244 und einen Bereich kleineren Durchmessers.

Der Ablaß 226 ist im Querschnitt vorzugsweise kreisförmig und axial zu der verlängerten Mittelachse der Steckhülse 216 ausgerichtet. Er ist fernerhin in einem Endstück 246 untergebracht und besitzt eine kegelige äußere Oberfläche 248, die zu einer entsprechend ausgebildeten kegelförmigen inneren Oberfläche 250 paßt, wobei sich die kegelige innere Oberfläche 250 an der Steckhülse 216 befindet. Das Endstück 246 ist sicher mit der Steckhülse 216 über einen Sicherungsring 252 verbunden. Der Ablaß 226 ist derart geformt, daß er zwei unterschiedliche Innendurchmesser 254 und 256 besitzt, die über einen Ventilsitz 258 in der Form einer kegeligen Oberfläche miteinander in Verbindung stehen. Der kleinere der beiden Innendurchmesser 256 ist an dem linken, d. h. dem äußeren Ende des Hauptschließelementes 232 gelegen.

Ein Ablaßventil 260 ist in dem Ablaß 226 vorgesehen, zwischen einer öffnenden und einer schließenden Stellung beweglich und vorzüglich als Kegelventil ausgebildet. Es weist eine flache rechte Oberfläche 262, von der aus sich ein Stift 264 erstreckt, und eine flache linke Oberfläche 266 auf, die sich aus dem linken Ende der Kupplungshälfte 210 heraus erstreckt wenn sich das Ablaßventil 260 in seiner schließenden Stellung befindet. Das Ablaßventil 280 wird durch die Berührung mit einem Nockenhebel 268 geöffnet, der mittels eines Stiftes 270 schwenkbar an dem Gehäuse 212 befestigt ist und einen ersten und einen zweiten Nocken 272 und 274 und einen Hebelarm 276 aufweist. Zur Vereinfachung wird der Hebelarm 276 so beschrieben, daß er sich anfänglich in einer Horizontalebene befindet, aus der er angehoben werden kann. Durch das Anheben des Hebelarms 276 in eine in Fig. 5 strichliniert angedeutete Stellung wird der erste Nocken 272 in Berührung mit dem linken Ende der Steckhülse 216 gebracht, wodurch diese nach rechts gedrängt wird, um das Einsetzen der Schlauchkupplungshälfte zu erleichtern. Wenn der Hebelarm 276 weiter angehoben wird, kommt der zweite Nocken 274 an der linken Oberfläche 266 des Ablaßventils 260 zur Anlage und bewirkt dabei, daß dieses sich nach rechts verschiebt und eine öffnende Stellung einnimmt. Vorzugsweise öffnet das Ablaßventil 260, bevor die Schlauchkupplungshälfte vollkommen in die Einstecköffnung 222 eingesetzt worden ist. Das Öffnen des Ablaßventils 260 bildet einen Ausgang für jegliche in dem Hohlraum 218 bzw. in dessen linken Ende eingeschlossene Flüssigkeit.

In dem Hohlraum 218 ist zwischen dem Zulauf 224 und dem Ablaß 226 ein beweglicher weiterer Kolben 278 eingesetzt, der hülsenförmig ausgebildet ist und somit in gleitendem Kontakt sowohl mit dem äußeren Umfang des Hauptschließelementes 232 als auch mit der inneren Oberfläche der Steckhülse 218 steht. Der Kolben 278 weist ferner eine linke und eine rechte Stirnfläche 280 und 282 und an seiner inneren Umfangsfläche eine Schulter 284 auf, die von einer linken Endfläche 286 des Hauptschließelementes 232 berührt wird, wenn dieses nach links bewegt worden ist. Eine Feder 287 ist zwischen der linken Stirnfläche 280 und dem Endstück 246 vorgesehen und so ausgelegt, daß sie eine Kraft auf den Kolben 278 ausübt, um diesen und das Hauptschließelement 232 ständig nach rechts zu drücken wie dies weiter unten erläutert wird.

Der Einfachheit wegen wird die Kammer zwischen dem Kolben 278 und dem Endstück 246 als Druckkammer oder Kolbenkammer 288 definiert. Sobald Flüssigkeit in diese Kolbenkammer 288 einströmt, wird sie die linke Stirnfläche 280 des Kolbens 278 beaufschlagen und diesen dazu bewegen, nach rechts zu gleiten. Das Maß der nach rechts gerichteten Bewegung des Kolbens 278 wird durch eine Schulter 290 begrenzt, die an dem inneren Umfang der Steckhülse 216 angeformt ist, während die nach links gerichtete Bewegung des Kolbens 278 durch den Anschlag an dem Endstück 246 begrenzt wird.

Ein Ringteil 292 ist ebenfalls in dem Hohlraum 218 angeordnet, es umgibt einen Teil des Hauptschließelementes 232 und weist eine rechte Stirnwandung 294 und eine linke Stirnfläche 296 auf. Die rechte Stirnwandung 294 steht in ständigem Kontakt mit einer Druckfeder 298, die den rechten Bereich des Hauptschließelementes 232 umgibt und an einem Sicherungsring 299 anliegt, der in der Nähe eines Dichtringes 300 angeordnet ist, die beide vorzugsweise am Fuß des länglichen Stößels 234 vorgesehen sind. Die linke Stirnfläche 296 des Ringteils 292 greift an einem Sicherungsring 302 an, der in eine in die innere Umfangsfläche der Steckhülse 216 eingearbeitete Ringnut 304 eingesetzt ist. Die Kombination der Druckfeder 298 und des Sicherungsringes 302 dient dazu, die Verschiebebewegung des Ringteils 292 zu begrenzen. Außerdem drückt die Druckfeder 298 die konische Dichtfläche 236 derart nach rechts, daß diese gegen den inneren Ventilsitz 238 anliegt, wie dies Fig. 5 zu entnehmen ist. Die Druckfeder 298 sollte eine derart ausreichende Kraft aufweisen, daß sie das Hauptschließelement 232 in einer schließenden, einen Flüssigkeitsstrom in der Verbindungsöffnung 220 sperrenden, Stellung hält, wenn keine Schlauchkupplungshälfte in die Einsteröffnung 234 eingesetzt ist.

Eine Entlastungsbohrung 306 ist in der Steckhülse 218 vorhanden, und zwar gleich links neben dem Ringteil 292, so daß ein Ausgang für jegliche Flüssigkeit geschaffen ist, die zwischen dem Kolben 278 und dem Ringteil 292 eingeschlossen sein könnte, wobei auch diese Flüssigkeit zur Weiterverwendung in den Vorratsbehälter zurückgeführt werden kann. Die Kupplungshälfte 210 ist mit einem Rückschlagventil 308 dargestellt, das sich in dem Durchflußkanal 240 des Hauptschließelementes 232 zwischen dem Zulauf 224 und dem Ablaß 228 befindet. Dieses Rückschlagventil 308 wird von einer elastischen Kugel 310 gebildet, die zwischen der ersten und der zweiten Ausnehmung 242 und 244 vorgesehen ist. Sie ist aus einem synthetischen Material, beispielsweise Neopren, hergestellt und besitzt einen Außendurchmesser, der geringfügig größer ist als der Innendurchmesser des Durchlaufkanals 240 und kleiner ist als der Durchmesser einer der Ausnehmungen 242 und 244. Die elastische Kugel 310 wird zwischen den Ausnehmungen 242 und 244 mittels einer weiteren, ersten und einer zweiten Feder 312, 314 gehalten, wobei sich die erste Feder 312 in dem Durchlaufkanal 240 rechts der elastischen Kugel 310 befindet und eine größere Federkraft innehat als die zweite Feder 314. Diese wiederum ist in dem Durchlaufkanal 240 links der elastischen Kugel 310 vorgesehen und von sehr biegsamer Natur, weshalb sie durch den Stift 264 und durch die innere Umfangsfläche des Durchlaufkanals 240 geführt wird. Die Federkonstante der zweiten Feder 314 ist vorzugsweise sehr klein und liegt im Bereich von 175 - 1 050 kg/sec$^2$.

Im folgenden wird anhand des Vorbeschriebenen auf die Funktion der Kupplungshälfte 210 eingegangen, wobei für den Kupplungs- bzw Abkupplungsvorgang die Beschreibung des ersten Ausführungsbeispiels analog gilt. In Fig. 5 ist die elastische Kugel 310 dargestellt, wie sie sich befindet, wenn die Kupplungshälfte 210 nicht mit einer Schlauchkupplungshälfte verbunden ist. In diesem Zustand befindet sich die elastische Kugel 310 in der Nähe der zweiten Ausnehmung 244 und ist leicht zusammengepreßt, so daß sie eine feste Abdichtung mit der inneren Umfangsfläche des Durchlaufkanals 240 bildet.

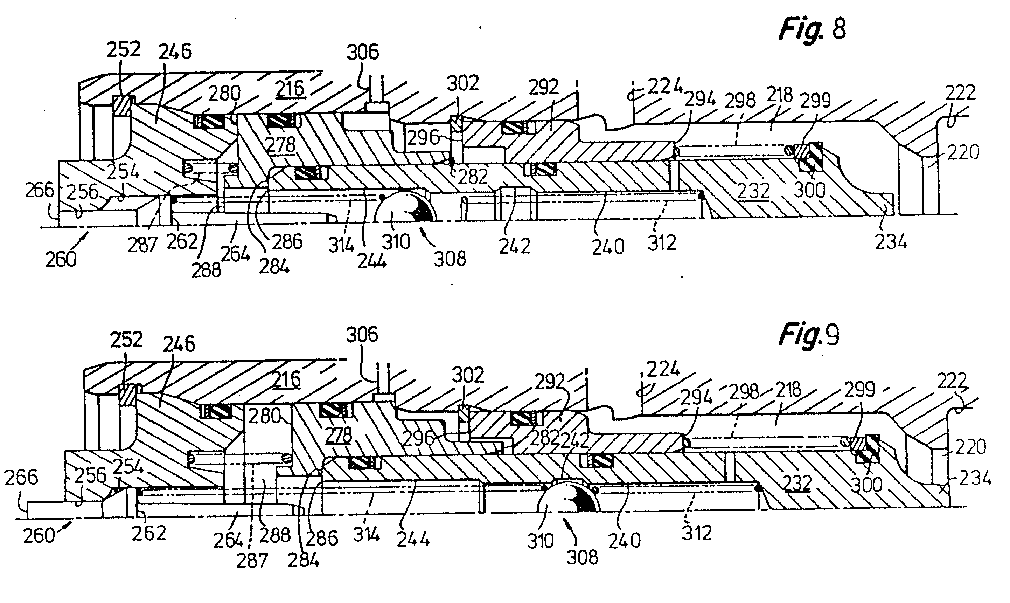

Im normalen Einsatz, wenn also eine Schlauchkupplungshälfte in die Einsteröffnung 222 eingesetzt wird, wird sich das Hauptschließelement 232 nach links bewegen, bis seine linke Endfläche 286 an der Schulter 284 des Kolbens 278 anliegt. Abhängig von dem Druck, der auf das Hauptschließelement 232 durch die Schlauchkupplungshälfte ausgeübt wird, werden sich das Hauptschließelement 232 und der Kolben 278 gemeinsam auf das Endstück 246 zubewegen. Während dieser Zeit befindet sich das Ablaßventil 260 in seinem geöffneten Zustand, da es in Berührung mit dem zweiten Nocken 274 des Nockenhebels 268 steht. Die maximal mögliche Bewegung nach links des Hauptschließelementes 232 und des Kolbens 278 ist der Stellung gemäß Fig. 8 zu entnehmen, die den tatsächlichen Kontakt zwischen der linken Stirnfläche 280 des Kolbens 278 und der rechten Stirnfläche des Endstückes 246 zeigt. Zu diesem Zeitpunkt ist die Feder 287 gespannt.

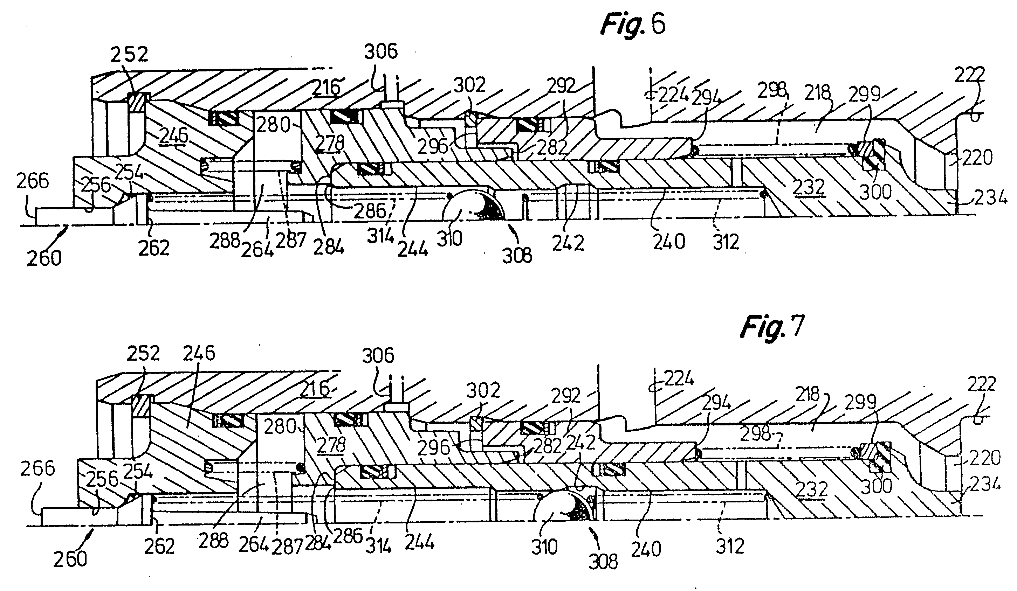

Wenn die Schlauchkupplungshälfte einmal vollkommen in der Einsteröffnung aufgenommen worden ist, wird der Nockenhebel 268 in seine anfängliche Stellung zurückgeführt und das Ablaßventil 260 schließt daraufhin. Zu diesem Zeitpunkt kann Flüssigkeit durch die Leitung 228 durch öffnen des Ventils 230 eingelassen werden. Die anfängliche Druckwelle wird in zwei Wege geleitet, und zwar einmal zu der Verbindungsöffnung 220 zu der Schlauchkupplungshälfte und zum zweiten durch den Durchlaufkanal 240 zu der Kolbenkammer 288. Siehe hierzu Fig. 6. Die Druckwelle wird die elastische Kugel 310 nach links verschieben, diese in Deckung mit der zweiten Ausnehmung 244 bringen und einen Flüssigkeitsstrom um die elastische Kugel 310 herum von dem Hohlraum 318 zu der Kolbenkammer 288 zustande bringen. Da der Flüssigkeitsdruck in der Kolbenkammer 288 zunimmt, wird er sich an der rechten Oberfläche 262 des Ablaßventils 260 aufbauen und sicherstellen, daß dieses geschlossen bleibt. Sobald die Strömungskraft der einströmenden Flüssigkeit der Kraft der Flüssigkeit auf der linken Seite der elastischen Kugel 310 gleichsteht, wird die Kraft der zweiten Feder 314 die elastische Kugel 310 derart zurückverstellen, daß sie die innere Umfangsfläche des Durchlaufkanals 240 berührt. Dadurch wird der Flüssigkeitsstrom durch den Durchlaufkanal 240 und aus der Kolbenkammer 288 abgesperrt, so daß das Hauptschließelement 232 in seiner Stellung verharrt.

Da es gebräuchlich ist, ein Paar von Kupplungshälften 210 und ein Paar von Schlauchkupplungshälften in einem geschlossenen Hydrauliksystem, wie es zwischen einem Ackerschlepper und einem Hydraulikaggregat bestehen kann, zu verwenden, ist es normal für einen Bedienenden, die Richtung der Flüssigkeitsströmung umzukehren, und zwar beliebig oft, um damit ein mit dem Hydraulikaggregat verbundenes Gerät beispielsweise anzuheben oder abzusenken. Wenn der Bedienende die Richtung des Flüssigkeitsstromes umkehrt, so daß die Flüssigkeit von einer Schlauchkupplungshälfte kommend durch eine zugehörige Kupplungshälfte 210 strömt, erfährt die Flüssigkeit in dem Hohlraum 218 einen Druckabfall. Wenn dies geschieht, dann kann der Flüssigkeitsdruck in der Kolbenkammer 288 zusätzlich der Kraft der zweiten Feder 314 ausreichen, um die elastische Kugel 310 nach rechts zu bewegen, wobei die erste Feder 312 gespannt werden würde, wenn sich die elastische Kugel 310 der ersten Ausnehmung 242 nähert. Wenn die Druckdifferenz zwischen dem Hohlraum 218 und der Kolbenkammer 288 ausreichend groß ist, um die Kraft der ersten Feder 312 zu überwinden, wird sich die elastische Kugel 310 in Deckung mit der ersten Ausnehmung 242 bringen und es der Flüssigkeit mit dem höherem Druck ermöglichen, nach rechts in den Hohlraum 318 zu fließen. Fig. 7 zeigt eine derartige Situation, kurz bevor die elastische Kugel 310 in Deckung mit der ersten Ausnehmung 242 gerät.

Fig. 9 zeigt einen Zustand, bei dem sich die elastische Kugel 310 in Deckung mit der ersten Ausnehmung 242 befindet, und die sich in der Kolbenkammer 288 befindliche Flüssigkeit mit dem höheren Druck kann zu dem Hohlraum 218 abgelassen werden. Ein derartiger Zustand tritt bei Situationen, wie sie aufgrund von Wärmeausdehnungen der Flüssigkeit in der Kolbenkammer 288 gegeben sind, ein, und zwar unabhängig davon, ob die Kupplungshälfte 210 mit der Schlauchkupplungshälfte verbunden ist oder nicht. Durch das Abströmenlassen der Flüssigkeit aus der Kolbenkammer 288 kann man sicher sein, daß kein Schaden an den inneren Teilen der Kupplungshälfte 210 auftritt.

Wenn sich die elastische Kugel 310 in Deckung mit der zweiten Ausnehmung 244 befindet, wie dies den Figuren 6 und 8 zu entnehmen ist, dann ist die erste Feder 312 vollkommen ausgestreckt und frei von jeder Berührung mit der elastischen Kugel 310. Dies bedeutet, daß die Kraft, die erforderlich ist, um die elastische Kugel 310 nach rechts in ihre abdichtende Stellung, in der sie an der inneren Umfangsfläche des Durchlaufkanals 240 anliegt, zu bringen, geringfügig größer ist als nur die Kraft der unter Druck stehenden Flüssigkeit, die sich an der rechten Seite der elastischen Kugel 310 aufbaut, d. h. die Kraft der ersten Feder 312 muß dabei nicht überwunden werden. Aufgrund der Differenzen der Federkräfte wird eine höhere Kraft benötigt, um die elastische Kugel 310 in Deckung mit der ersten Ausnehmung 242 zu bringen, als die Kraft, die benötigt wird, um sie in Deckung mit der zweiten Ausnehmung 244 zu bringen. Diese Differenz bedeutet, daß dann, wenn sich die elastische Kugel 310 an der zweiten Ausnehmung 244 befindet, sie ein Anti-Durchflußblockier- oder Durchflußfreihalteventil bildet, während, wenn sie sich im Bereich der ersten Ausnehmung 242 befindet, sie ein Druckbegrenzungsventil darstellt.

## Patentansprüche

1. Kupplungshälfte (10, 210) für eine Leitungsverbindung, die ein Gehäuse (18, 216) aufweist, mit einem zu einer Druckquelle führenden wahlweise schließbaren Einlaß (26, 224), einem Ablaß (28, 226) und einem Durchgang (22, 220) zu einer zweiten Kupplungshälfte (12), die an ihrem dem Durchgang (22, 220) zugelegenen Ende über ein Sperrventil (34) verschließbar ist, wobei in dem Gehäuse (18, 216) ein im entkuppelten Zustand den Durchgang (22, 220) unter der Wirkung einer Feder (96, 298) verschließender und im gekuppelten Zustand das Sperrventil (34) öffnender Kolben (46, 232) vorgesehen ist, der eine mit dem Einlaß (26, 224) und mit dem Durchgang (22, 220) im gekuppelten Zustand verbundene Bohrung (54, 240) aufweist, die anderenends an dem dem Durchgang (22, 220) abgelegenen den über ein Ventil (68, 260) verschließbaren Ablaß (28, 226) aufweisenden Ende des Gehäuses (18, 216) mit einem Druckraum (288) in Verbindung steht, dadurch gekennzeichnet, daß in der Bohrung (54, 240) ein Rückschlagventil (108, 308) vorgesehen ist.

2. Kupplungshälfte (10, 210) für eine Leitungsverbindung nach Anspruch 1, dadurch gekennzeichnet, daß bei Druckspitzen eine Verbindung des Druckraumes (288) zum Einlaß (26, 224) entsteht.

3. Kupplungshälfte (10, 210) für eine Leitungsverbindung nach Anspruch 1 oder 2, bei der das den Ablaß (28, 226) verschließende Ventil (88, 260) gegen die Wirkung einer Feder (118, 314) verschiebbar ist, dadurch gekennzeichnet, daß das Rückschlagventil (108, 308) gegen die Wirkung dieser Feder (118, 314) in seine den Durchfluß vom Einlaß (26, 224) zu dem Druckraum (288) öffnende Stellung bringbar ist.

4. Kupplungshälfte (10) für eine Leitungsverbindung nach Anspruch 1 oder 2 mit einem den Kolben (46) umgebenden weiteren Kolben (78), dadurch gekennzeichnet, daß das Rückschlagventil (108) als Kegelventil ausgebildet ist, das in der Bohrung (54) verschiebbar und gegen den weiteren Kolben (78) flüssigkeitsdicht zur Anlage bringbar ist.

5. Kupplungshälfte (210) für eine Leitungsverbindung nach einem oder mehreren der Ansprüche 1 bis 3, dadurch gekennzeichnet, daß die Bohrung (240) als Stufenbohrung ausgebildet ist und mindestens einen Bereich größeren (244) und einen Bereich kleineren Durchmessers aufweist und eine Kugel (310) aufnimmt, die entgegen der Wirkung der gegen das Ventil (260) am Ablaß (226) anliegenden Feder (314) in den Bereich der Bohrung mit dem größeren Durchmesser (244) verschiebbar ist, wobei die Kugel (310) einen kleineren Durchmesser aufweist als die Bohrung (240) in dem Bereich mit dem größeren Durchmesser.

6. Kupplungshälfte (10, 210) für eine Leitungsverbindung nach Anspruch 3, dadurch gekennzeichnet, daß sich in Richtung der Längsmittelachse der Bohrung (54, 240) ein mit dem den Ablaß (28, 226) verschließenden Ventil (68, 260) verbundener Stift (71, 264) erstreckt, auf dem die Feder (118, 314) geführt ist.

7. Kupplungshälfte (10, 210) für eine Leitungsverbindung nach Anspruch 2, dadurch gekennzeichnet, daß das Rückschlagventil (108, 308) entgegen der Wirkung einer weiteren Feder (120, 314) und in Abhängigkeit von dem in dem Druckraum (288) herrschenden Druck in eine die Verbindung des Druckraumes (288) mit dem Einlaß (26, 224) zulassende Offenstellung bringbar ist.

8. Kupplungshälfte (10) für eine Leitungsverbindung nach Anspruch 7, dadurch gekennzeichnet, daß das Rückschlagventil (108) eine Längsbohrung aufweist, die einenends, und zwar an dem dem Ablaß (28) abgelegenen Ende des Rückschlagventils (108), über eine von der weiteren Feder (120) beaufschlagte weitere Kugel (116) verschließbar ist.

9. Kupplungshälfte (10) für eine Leitungsverbindung nach Anspruch 3 und 8, dadurch gekennzeichnet, daß die Feder (118) in der Längsbohrung geführt ist.

10. Kupplungshälfte (210) für eine Leitungsverbindung nach Anspruch 5, dadurch gekennzeichnet, daß in dem Bereich der Bohrung (240) mit dem kleineren Durchmesser ein weiterer Bereich größeren Durchmessers (242) vorgesehen ist, in den die Kugel (310) entgegen der Wirkung der weiteren Feder (312) verschiebbar ist.

11. Kupplungshälfte (210) für eine Leitungsverbindung nach Anspruch 5, dadurch gekennzeichnet, daß die Kugel (310) aus elastischem Material besteht und einen Durchmesser aufweist, der größer ist als der Innendurchmesser der Bohrung (240) in ihrem Bereich mit dem kleineren Durchmesser.

12. Kupplungshälfte (10, 210) für eine Leitungsverbindung nach einem oder mehreren der Ansprüche 3 und 7, dadurch gekennzeichnet, daß die Feder (118, 314) und die weitere Feder (120, 312) unterschiedliche Federkonstanten aufweisen.

## Claims

1. A coupling half (10, 210) for a line connection, which comprises a housing (18, 216), with a selectively closable inlet (28, 224) leading to a pressure source, an outlet (28, 226) and a through passage (22, 220) to a second coupling half (12) which can be closed at its end towards the passage (22, 220) by way of a stop valve (34), wherein provided in the housing (18, 216) is a piston (46, 232) which in the uncoupled condition closes the passage (22, 220) under the force of a spring (96, 298) and in the coupled condition opens the stop valve (34), the piston having a bore (54, 240) which is connected to the inlet (26, 224) and to the passage (22, 220) in the coupled condition and which at the other end communicates with a pressure chamber (288) at the end of the housing (18, 218) which is remote from the passage (22, 220) and which has the outlet (28, 226) which is closable by way of a valve (68, 260), characterised in that a non-return valve (108, 308) is provided in the bore (54, 240).

2. A coupling half (10, 210) for a line connection according to claim 1 characterised in that in the event of pressure peaks the pressure chamber (288) is communicated with the inlet (26, 224).

3. A coupling half (10, 210) for a line connection according to claim 1 or claim 2 wherein the valve (68, 260) for closing the outlet (28, 226) is displaceable against the force of a spring (118, 314) characterised in that the non-return valve (108, 308) can be moved against the force of said spring (118, 314) into its position of opening for a throughflow from the inlet (26, 224) to the pressure chamber (288).

4. A coupling half (10) for a line connection according to claim 1 or claim 2 comprising a further piston (78) around the piston (46), characterised in that the non-return valve (108) is in the form of a ball valve which is displaceable in the bore (54) and which can be caused to bear fluid-tightly against the further piston (78).

5. A coupling half (210) for a line connection according to one or more of claims 1 to 3 characterised in that the bore (240) is in the form of a stepped bore and has at least one larger-diameter region (244) and a smaller-diameter region and accommodates a ball (310) which is displaceable against the force of the spring (314) bearing against the valve (260) at the outlet (226), into the region (244) of the bore which is of the larger diameter, wherein the ball (310) is of smaller diameter than the bore (240) in the larger-diameter region.

6. A coupling half (10, 210) for a line connection according to claim 3 characterised in that a pin (71, 264) which is connected to the valve (68, 260) for closing the outlet (28, 226) extends in the direction of the longitudinal centre line of the bore (54, 240), the spring (118, 314) being carried on the pin (71, 264).

7. A coupling half (10, 210) for a line connection according to claim 2 characterised in that the non-return valve (108, 308) can be brought into an open position permitting communication of the pressure chamber (288) to the inlet (26, 224), against the force of a further spring (120, 314) and in dependence on the pressure obtaining in the pressure chamber (288).

8. A coupling half (10) for a line connection according to claim 7 characterised in that the non-return valve (108) has a longitudinal bore which at one end, namely at the end of the non-return valve (108) that is remote from the outlet (28), can be closed by way of a further ball (118) which is loaded by the further spring (120).

9. A coupling half (10) for a line connection according to claims 3 and 8 characterised in that the spring (118) is guided in the longitudinal bore.

10. A coupling half (210) for a line connection according to claim 5 characterised in that provided in the region of the bore (240) which is

13

of the smaller diameter is a further region (242) of larger diameter, into which the ball (310) is displaceable against the force of the further spring (312).

11. A coupling half (210) for a line connection according to claim 5 characterised in that the ball (310) consists of elastic material and is of a diameter which is larger than the inside diameter of the bore (240) in its smaller-diameter region.

12. A coupling half (10, 210) for a line connection according to one or more of claims 3 and 7 characterised in that the spring (118, 314) and the further spring (120, 312) have different spring rates.

**Revendications**

1.- Moitié de raccord (10, 210) pour raccordement de conduit, comportant un corps (18, 216) muni d'une entrée (26, 224) pouvant être obturée sélectivement et aboutissant à une source de pression, d'une sortie (28, 226) et d'un passage (22, 220) communiquant avec une seconde moitié de raccord (12) qui peut être obturée à son extrémité orientée vers le passage (22, 220) par une soupape de fermeture (34), un piston (46, 232) obturant le passage (22, 220) sous l'action d'un ressort (96, 298) dans la condition de désaccouplement et ouvrant la soupape d'obturation (34) dans la condition d'accouplement étant prévu dans le corps (18, 216), ce piston comportant un perçage (54, 240) relié dans la condition d'accouplement à l'entrée (26, 224) et au passage (22, 220), l'autre extrémité de ce perçage étant en communication, à l'extrémité du corps (18, 216) opposée au passage (22, 220) et comportant la sortie (28, 226) pouvant être obturée par une soupape (68, 260), avec une chambre de pression (288), caractérisée en ce qu'un clapet anti-retour (108, 308) est prévu dans le perçage (54, 240).

2.- Moitié de raccord (10, 210) pour raccordement de conduit suivant la revendication 1, caractérisée en ce qu'en cas de pointes de pression, une communication est établie entre la chambre de pression (288) et l'entrée (26, 224).

3.- Moitié de raccord (10, 210) pour raccordement de conduit suivant la revendication 1 ou 2, dans laquelle la soupape (68, 260) obturant la sortie (28, 226) est déplaçable en antagonisme à l'action d'un ressort (118, 314), caractérisée en ce que le clapet anti-retour (108, 308) peut être amené, en antagonisme à l'action de ce ressort (118, 314), dans sa position d'ouverture permettant l'écoulement depuis l'entrée (26, 224) jusqu'à la chambre de pression (288).

4.- Moitié de raccord (10) pour raccordement de conduit suivant la revendication 1 ou 2, comportant un autre piston (78) entourant le piston (46), caractérisée en ce que le clapet anti-retour (108) est constitué par une soupape conique ou à pointeau qui est montée de façon coulissante dans le perçage (54) et qui peut être amenée dans une position étanche vis-à-vis du liquide contre l'autre piston (78).

5.- Moitié de raccord (210) pour raccordement de conduit suivant l'une quelconque des revendications 1 à 3, caractérisée en ce que le perçage (240) se présente sous la forme d'un perçage à gradins et comporte au moins une zone (244) de plus grand diamètre et une zone de plus petit diamètre et reçoit une bille (310) qui est déplaçable dans la zone du perçage présentant le plus grand diamètre (244) en antagonisme à l'action du ressort (314) s'appliquant contre la soupape (260) prévue à la sortie (226), la bille (310) ayant un diamètre plus petit que celui du perçage (240) dans la zone de plus grand diamètre.

6.- Moitié de raccord (10, 210) pour raccordement de conduit suivant la revendication 3, caractérisée en ce qu'un doigt (71, 264) relié à la soupape (68, 260) obturant la sortie (28, 226) s'étend dans la direction de l'axe longitudinal du perçage (54, 240), le ressort (118, 314) étant guidé sur ce doigt.

7.- Moitié de raccord (10, 210) pour raccordement de conduit suivant la revendication 2, caractérisée en ce que le clapet anti-retour (108, 308) peut être amené, en antagonisme à l'action d'un autre ressort (120, 314) et en fonction de la pression régnant dans la chambre de pression (288), dans une position d'ouverture établissant la communication entre la chambre de pression (288) et l'entrée (26, 224).

8.- Moitié de raccord (10) pour raccordement de conduit suivant la revendication 7, caractérisée en ce que le clapet anti-retour (108) présente un perçage longitudinal qui peut être obturé à une extrémité, plus spécialement à l'extrémité du clapet anti-retour (108) opposée à la sortie (28), par l'intermédiaire d'une autre bille (116) soumise à l'action de l'autre ressort (120).

9.- Moitié de raccord (10) pour raccordement de conduit suivant les revendications 3 et 8, caractérisée en ce que le ressort (118) est guidé dans le perçage longitudinal.

10. Moitié de raccord (210) pour raccordement de conduit suivant la revendication 5, caractérisée en ce qu'il est prévu, dans la zone du perçage (240) ayant le plus petit diamètre, une autre zone de plus grand diamètre (242) dans laquelle la bille (310) est déplaçable en antagonisme à l'action de l'autre ressort (312).

11.- Moitié de raccord (210) pour raccordement de conduit suivant la revendication 5, caractérisée en ce que la bille (310) est en un matériau élastique et présente un diamètre qui est supérieur au diamètre intérieur du perçage (240) dans sa zone de plus petit diamètre.

12.- Moitié de raccord (10, 210) pour raccordement de conduit suivant les revendications 3 et 7, caractérisée en ce que le ressort (118, 314) et l'autre ressort (120, 312) ont des constantes d'élasticité différentes.

Fig. 1

0 108 344

Fig. 3

Fig. 4

Fig. 2

*Fig. 5*

*Fig.* 6

*Fig.* 7

0 108 344

*Fig. 8*

*Fig. 9*

0 108 344